Europäisches Patentamt

European Patent Office

Office européen des brevets

(19)

(11) **EP 0 625 762 B1**

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(51) Int Cl.$^7$: **G06T 3/00**, G06T 5/00

(21) Anmeldenummer: **94201342.6**

(22) Anmeldetag: **11.05.1994**

(54) **Verfahren zum Entzerren von Röntgenaufnahmen und Anordnung zur Durchführung des Verfahrens**

Method for correcting radiographic images and device for achieving it

Méthode de correction des images radiographiques et dispositif de réalisation de la méthode

(84) Benannte Vertragsstaaten:
**DE FR GB NL**

(30) Priorität: **19.05.1993 DE 4316847**

(43) Veröffentlichungstag der Anmeldung:
**23.11.1994 Patentblatt 1994/47**

(73) Patentinhaber:
• **Philips Corporate Intellectual Property GmbH**
**52064 Aachen (DE)**
Benannte Vertragsstaaten:
**DE**
• **Koninklijke Philips Electronics N.V.**
**5621 BA Eindhoven (NL)**
Benannte Vertragsstaaten:
**FR GB NL**

(72) Erfinder:
• **Koppe, Reiner Heinrich, Dr.**
**D-20097 Hamburg (DE)**
• **Klotz, Erhard Paul Artur**
**D-20097 Hamburg (DE)**

(74) Vertreter: **Hartmann, Heinrich, Dipl.-Ing. et al**
**Philips Corporate Intellectual Property GmbH,**
**Habsburgerallee 11**
**52064 Aachen (DE)**

(56) Entgegenhaltungen:
**EP-A- 0 375 053**

• **IEEE TRANSACTIONS ON SYSTEMS, MAN AND CYBERNETICS, Bd.23, Nr.1, Januar 1993, NEW YORK US Seiten 155 - 172 TANG ET AL. 'Image Transformation Approach to Nonlinear Shape Restoration'**
• **COMPUTERS IN TECHNOLOGY, 7. Oktober 1986, BOSTON, MASSACHUSETTS Seiten 615 - 618 TEHRANI ET AL. 'HIGH-SPEED DIGITAL RADIOGRAPHIC PINCUSHION DISTORSION, CORRECTION USING AN ARRAY PROCESSOR'**

**Beschreibung**

Verfahren zum Entzerren von Röntgenaufnahmen und Anordnung zur Durchführung des Verfahrens.

Die Erfindung betrifft ein Verfahren zum Transformieren eines durch eine Röntgenaufnahme erzeugten verzerrten Eingangsbildes, das sich aus durch ihre Lage und ihren jeweiligen Eingangs-Bildwert definierten Bildelementen zusammensetzt, in ein im wesentlichen verzerrungsfreies Ausgangsbild, das sich aus durch ihre Lage und ihren Ausgangs-Bildwert definierten Bildelemente zusammensetzt. Unter einem Bildelement wird dabei die kleinste Flächeneinheit verstanden, der ein von seiner Umgebung abweichender, einheitlicher Helligkeitswert zugeordnet werden kann. Dieser Helligkeitswert, der ein Maß für die Absorption der Röntgenstrahlung bei der Röntgenaufnahme ist, wird im folgenden als Bildwert bezeichnet. Die den Bildelementen des verzerrten Eingangsbildes zugeordneten Bildwerte werden "Eingangs-Bildwerte" genannt und die Bildwerte des Ausgangsbildes "Ausgangs-Bildwerte". Die Eingangs-Bildwerte bzw. das Eingangsbild werden durch die Röntgenaufnahme erzeugt. Die Ausgangs-Bildwerte werden durch den Transformationsprozeß aus den Eingangs-Bildwerten abgeleitet.

Verfahren dieser Art sind bekannt z.B. aus dem Aufsatz von Tehrani et al (IEEE Comp. in Cardiology, Boston, Oct. 7 - 10, 1986, (1987), Seiten 615 bis 618). Bei diesem Verfahren wird davon ausgegangen, daß ein Bildelement in dem einen Bild nach der Transformation in das andere Bild seine Größe und Form beibehält. Die Transformation erfolgt dabei in der Weise, daß für alle Bildelemente des Ausgangsbildes deren Lage im Eingangsbild berechnet wird. Falls diese Lage exakt mit der Lage eines Bildelementes im Eingangsbild übereinstimmt, wird dessen Eingangs-Bildwert dem Bildelement des Ausgangsbildes als Ausgangs-Bildwert zugeordnet. Wenn stattdessen das transformierte Bildelement mehrere Bildelemente (in der Regel vier) Bildwerte im Eingangsbild teilweise überdeckt, wird dem Bildelement des Ausgangsbildes ein Ausgangs-Bildwert zugeordnet, der der gewichteten Summe der Eingangs-Bildwerte entspricht, die zu den von dem transformierten Bildelement teilweise bedeckten Bildelementen des Eingangsbildes gehören. Durch diese sogenannte bilineare Interpolation wird die Qualität des entzerrten Ausgangsbildes verbessert (gegenüber dem Fall, in dem Bildelement des Ausgangsbildes lediglich der Eingangs-Bildwert desjenigen Bildelementes im Eingangsbild zugeordnet wird, das am dichtesten bei dem transformierten Bildelement liegt), doch ist die Bildqualität noch nicht zufriedenstellend - insbesondere bei starken Verzerrungen.

Aufgabe der vorliegenden Erfindung ist es, ein Verfahren der eingangs genannten Art so auszugestalten, daß die Bildqualität des Ausgangsbildes verbessert wird.

Eine erste bevorzugte Lösung sieht vor, daß die Lage der Eckpunkte der Bildelemente des Ausgangsbildes in dem Eingangsbild sowie die Fläche der von den Eckpunkten in dem Eingangsbild definierten Vielecke bestimmt wird und daß den Bildelementen des Ausgangsbildes jeweils ein Ausgangs-Bildwert zugeordnet wird, der dem Integral der Eingangs-Bildwerte über die vom zugehörigen Vieleck bedeckte Fläche im Eingangsbild entspricht.

Eine zweite Lösung dieser Aufgabe sieht vor, daß die Lage der Eckpunkte der Bildelemente des Eingangsbildes in dem Ausgangsbild sowie die Fläche der von den Eckpunkten in dem Ausgangsbild definierten Vielecke bestimmt wird und daß die Eingangs-Bildwerte derjenigen Bildelemente, deren Eckpunkte in einem Bildelement des Ausgangsbildes liegen, durch gewichtete Summenbildung zur Bestimmung des Ausgangs-Bildwertes des betreffenden Bildelementes des Ausgangsbildes herangezogen werden.

Die Erfindung basiert auf der Erkenntnis, daß die Annahme, auf der die bekannten Verfahren beruhen, nämlich daß die Bildelemente nach der Transformation ihre Größe und Form beibehalten, nur eine Näherung darstellt, die umso ungenauer ist, je größer die Verzerrungen im Bild sind. Bei starken Verzerrungen geht nämlich die beispielsweise quadratische Form eines Bildelements in dem einen Bild nach der Transformation in das andere Bild in ein rhombus- oder trapezförmiges Viereck über, dessen Flächeninhalt von der Fläche des ihm zugeordneten Bildelements im Eingangsbild abweichen kann. Die mit der Veränderung der Form und der Fläche des Bildelements durch die Transformation einhergehenden Ungenauigkeiten werden bei der Erfindung dadurch vermieden, daß bei der Ermittlung der Lage eines transformierten Bildes nicht nur ein einziger Punkt zugrundegelegt wird (beispielsweise der Mittelpunkt des Bildelementes), sondern alle Eckpunkte des betreffenden Bildelements (bei einem quadratischen Bildelement also vier Eckpunkte).

Die beiden auf diesen Überlegungen beruhenden Lösungen unterscheiden sich dadurch, daß bei der ersten Lösung von den Bildelementen des Ausgangsbildes ausgegangen wird und die Lage ihrer Eckpunkte im Eingangsbild bestimmt wird, während bei der zweiten Lösung von den Bildelementen des Eingangsbildes ausgegangen wird und die Lage ihrer Eckpunkte im Ausgangsbild bestimmt wird. Während sich bei der ersten Lösung unmittelbar der zu dem jeweiligen Ausgangsbildelement gehörende Ausgangs-Bildwert ergibt, müssen bei der zweiten Lösung mehrere Bildwerte (gewichtet) summiert werden. Deshalb ist die erste Lösung einfacher und wird bevorzugt.

Wenn man die erfindungsgemäßen Verfahren in der Weise durchführt, daß man zunächst nur von einem einzigen Bildelement ausgeht und danach für dieses Bildelement bzw. das daraus durch die Transformation resultierende Vieleck einen Ausgangs-Bildwert ableitet, danach ein weiteres Bildelement heranzieht usw., ergibt sich ein vergleichsweise hoher Rechenaufwand, denn für jedes Bildelement muß die Lage seiner Eckpunkte (in der Regel vier) im jeweils anderen Bild bestimmt werden. Dieser Rechenaufwand läßt sich dadurch reduzieren, daß nach einer Weiterbildung der Erfindung zunächst die Lage der Eckpunkte aller Bildelemente bestimmt und gespeichert wird, bevor die Zuordnung zwischen den Bildwerten des Eingangsbildes und des Ausgangsbildes erfolgt. Diese Lösung geht davon aus, daß bis auf die an den Rändern des Bildes liegenden Eckpunkte von Bildelementen jeder Eckpunkt zu mehreren Bildelementen gehört; bei viereckigen Bildelementen gehören die innerhalb des Bildes liegenden Eckpunkte zu vier Bildelementen. Infolgedessen muß die Lage dieser Eckpunkte nur einmal bestimmt werden, wodurch die Berechnung wesentlich beschleunigt wird.

Allerdings setzt diese Lösung voraus, daß nicht nur das Eingangsbild und das Ausgangsbild gespeichert werden müssen, sondern auch die Lage der Eckpunkte des einen Bildes in dem jeweils anderen Bild. Dieser Aufwand für die Speicherung läßt sich erfindungsgemäß dadurch weiter reduzieren, daß die Lage der zu einer ersten Reihe oder Spalte von Bildelementen gehörenden Eckpunkte berechnet und gespeichert wird, daß danach für Bildelemente dieser Reihe bzw. Spalte und die dazu korrespondierenden Vielecke in dem anderen Bild die Zuordnung erfolgt, daß danach die Lage der Eckpunkte einer zweiten, der ersten benachbarten Reihe bzw. Spalte von Bildelementen unter Verwendung der zu diesen Bildelementen gehörenden Eckpunkte der Bildelemente der ersten Reihe bzw. Spalte erfolgt, wonach für die zweite Reihe bzw. Spalte von Bildelementen die Zuordnung der Bildwerte erfolgt. Diese Lösung erfordert nur für die Eckpunkte zweier Zeilen (oder Spalten) von Bildelementen eine Zwischenspeicherung.

Eine Anordnung zur Durchführung des erfindungsgemäßen Verfahrens ist gekennzeichnet durch

a) ein Röntgenaufnahmesystem zum Erzeugen eines Eingangsbildes durch eine Röntgenaufnahme,
b) einen Bildwandler zum Umsetzen des Eingangsbildes in eine Folge digitaler Bildwerte,
c) eine Speicheranordnung zum Speichern von Eingangs-Bildwerten und von Ausgangs-Bildwerten,
d) Mitteln zur Bestimmung der Lage von Eckpunkten des einen Bildes in dem anderen Bild sowie der Fläche der von den Eckpunkten im anderen Bild definierten Vielecke.
e) Mittel zur Zuordnung zwischen den Bildwerten eines Bildelements und des zugehörigen Vielecks in dem anderen Bild.

Die Erfindung wird nachstehend anhand der Zeichnungen näher erläutert. Es zeigen:

Fig. 1       ein Blockdiagramm einer Anordnung zur Durchführung der Erfindung.
Fig. 2       einen Ausschnitt aus dem Eingangsbild und dem Ausgangsbild für die erste Lösung,
Fig. 3       ein dafür geeignetes Flußdiagramm,
Fig. 4       einen Ausschnitt aus dem Eingangs- und dem Ausgangsbild für die zweite Lösung und
Fig. 5       ein dafür geeignetes Flußdiagramm.

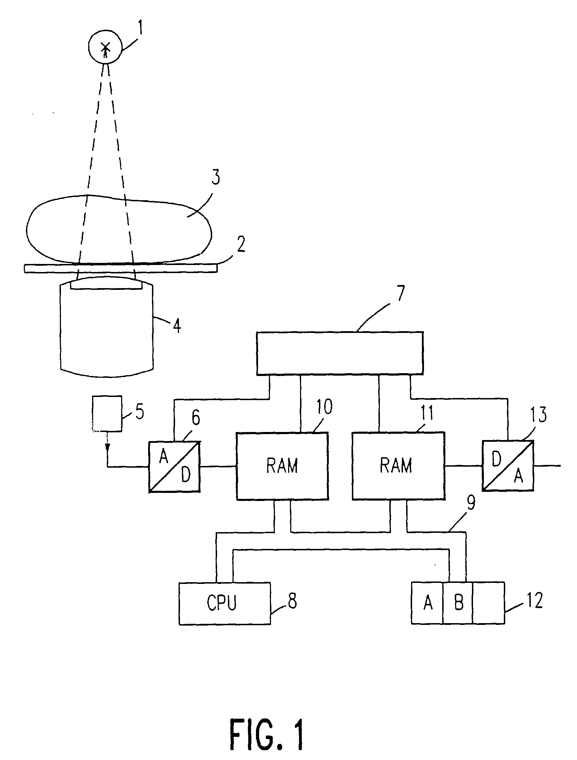

Die in Fig. 1 dargestellte Röntgenanlage umfaßt einen Röntgenstrahler 1, der einen auf einer Tischplatte 2 befindlichen Patienten 3 durchstrahlt. Das dadurch erzeugte Röntgenstrahlenrelief wird dem Eingangsschirm eines Bildverstärkers 4 zugeführt, dessen in der Helligkeit verstärktes Ausgangsbild von einer Fernsehkamera 5 aufgenommen wird. Der Eingangsbildschirm des Verstärkers 4 ist gekrümmt, was dazu führt, daß das von dem Bildverstärker gelieferte Bild kissenförmige Verzerrungen aufweist. Weitere, weniger ausgeprägte Verzerrungen werden durch den Einfluß des Erdmagnetfeldes und durch die Videokamera 5 hervorgerufen.

Das von der Videokamera 5 gelieferte analoge Videosignal wird von einem Analog-Digital-Wandler 6 in eine Folge digitaler Datenworte umgesetzt, die in einem Speicher 10 unter aufeinanderfolgenden Adressen gespeichert werden. Dies wird von einer Video-Kontrolleinheit 7 gesteuert. Der Speicher 10, der somit das verzerrte Eingangsbild enthält, ist über ein Bussystem 9 an einen Mikrocomputer 8 angeschlossen, der über dieses Bussystem auch auf weitere Speicher 11 und 12 Zugriff hat. Der Speicher 11 dient der Aufnahme des durch die Transformation von Verzerrungen befreiten Ausgangsbildes. Mittels der Video-Kontrolleinheit 7 können die Ausgangs-Bildwerte aus dem Speicher 11 ausgelesen und über einen Digital-Analog-Wandler 13 einer nicht näher dargestellten Wiedergabeeinheit (Monitor) zugeführt werden.

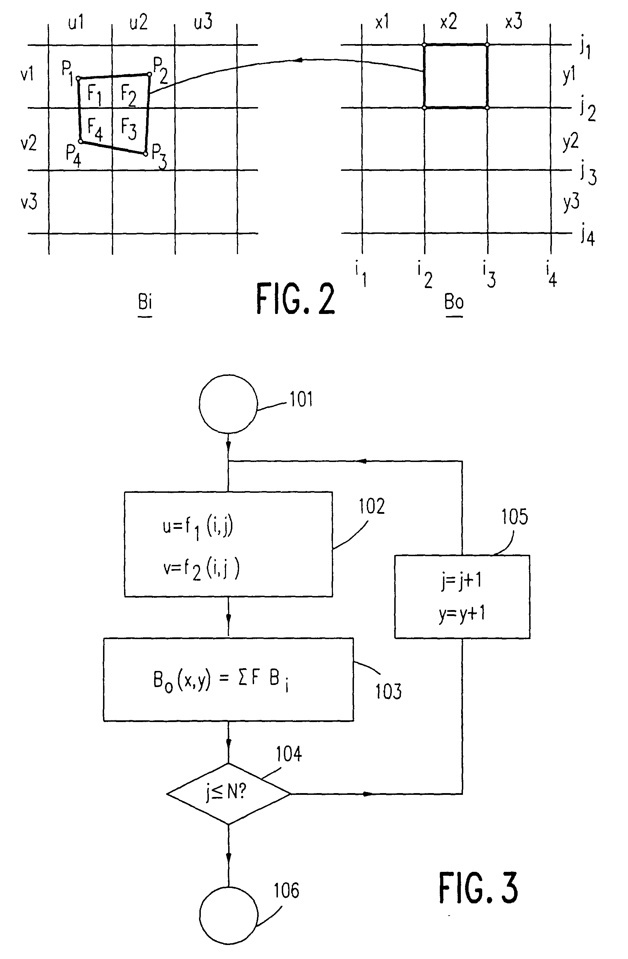

Nach einer Röntgenaufnahme ist im Speicher 10 das verzerrte Eingangsbild ($B_i$) enthalten. Im folgenden wird anhand der Figuren 2 und 3 erläutert, wie durch die Transformation ein entzerrtes Bild ($B_o$) im Speicher 11 erzeugt wird.

Fig. 2 zeigt einen Ausschnitt aus der Bildmatrix des Eingangsbildes $B_i$ und des Ausgangsbildes $B_o$. Der Ausschnitt zeigt einen Bereich von 3 x 3 Bildelementen. Die Bildelemente haben, wie allgemein üblich, eine quadratische Form. Grundsätzlich sind aber auch andere Formen möglich, z.B. eine rechteckige Form oder eine sechseckige Form. Die Bildelemente des Eingangsbildes $B_i$ sind durch ihre Lage, d.h. durch ihre Koordinaten u, v (mit u ($u_1$, $u_2$, $u_3$ ...) und v ($v_1$, $v_2$, $v_3$ ...) gekennzeichnet. Entsprechend kennzeichnen die Koordinaten x($x_1$, $x_2$, $x_3$ ...) und y($y_1$, $y_2$, $y_3$ ...) die Lage der Bildelemente im Ausgangsbild. Die Bildelemente im Ausgangsbild werden seitlich durch Linien i ($i_1$, $i_2$, $i_3$ ...) und in der Höhe durch Linien j($j_1$, $j_2$, $j_3$ ...) begrenzt. Auch im Eingangsbild $B_i$ sind solche Begrenzungslinien vorhanden, doch ist deren Benennung für das erfindungsgemäße Verfahren nicht erforderlich. Die Schnittpunkte zweier Linien i, j definieren jeweils einen Eckpunkt. Bei einem Bild mit N x N Bildelementen gibt es (N + 1) x (N + 1) Eckpunkte. N liegt in der Praxis bei z.B. 512.

Die diskreten Werte für u,v bzw. x,y, die die Lage eines Bildelementes (bzw. dessen Mittelpunkt) im Eingangsbild $B_i$ bzw. im Ausgangsbild $B_o$ kennzeichnen, sind vorzugsweise ganzzahlige Werte. Jeder Kombination u,v im Eingangsbild $B_i$ bzw. x,y im Ausgangsbild $B_o$ ist im Speicher 10 bzw. 11 ein Speicherplatz mit einer bestimmten Adresse zugeordnet.

Der erste Schritt des Verfahrens besteht darin, ausgehend von den Bildelementen des Ausgangsbildes die räumliche Zuordnung mit den Bildelementen des Eingangsbildes zu bestimmen. Während bei den bekannten Verfahren zu diesem Zweck pro Bildelement die Lage eines einzigen Punktes, z.B. des Mittelpunktes berechnet wird und angenommen wird, daß Lage und Größe dabei unverändert bleiben, wird bei dem erfindungsgemäßen Verfahren pro Bildelement die Lage von mehreren Punkten berechnet, nämlich von sämtlichen (vier) Eckpunkten. Gleichwohl ist der Rechenaufwand für diese Berechnungen nur geringfügig größer, weil bis auf die Eckpunkte an den Bildrändern jeder Eckpunkt eines Bildelements noch zu drei weiteren Bildelementen gehört. Statt N x N Berechnungen sind bei der Erfindung (N + 1) x (N + 1) Berechnungen erforderlich.

Bei dem anhand von Fig. 3 erläuterten Verfahren wird vorausgesetzt, daß im vorangegangenen Programmteil 101 die Koordinaten u,v sämtlicher Eckpunkte des Ausgangsbildes auf der Linie $j = j_1$ im Eingangsbild berechnet und im Speicher 12 im Bereich A gespeichert worden sind. Im nächsten Schritt 102 werden die Koordinaten u,v derjenigen Eckpunkte im Ausgangsbild berechnet, die auf der nächsten Linie ($j=j_2$) liegen. Wie aus dem Aufsatz von Tehrani et al bekannt, kann diese Berechnung mittels eines Polynoms entsprechend den Gleichungen (1) und (2) erfolgen:

$$u = a_o + a_1 i + a_2 j + a_3 ij + a_4 i^2 + a_5 j^2 \tag{1}$$

$$v = b_o + b_1 i + b_2 j + b_3 ij + b_4 i^2 + b_5 j^2 \tag{2}$$

Die Koeffizienten $a_0 ... a_5$ bzw. $b_0 ... b_5$ werden dabei einmal mittels eines gitterförmigen Testkörpers bestimmt und gespeichert und zur Berechnung bei allen folgenden Bildern herangezogen. Bei stärkeren Verzerrungen müssen die Berechnungen mit einer höheren Genauigkeit erfolgen, beispielsweise durch ein Polynom höherer Ordnung. Die so berechneten Koordinaten u,v werden im Speicher 12 im Bereich B gespeichert.

Danach ist die Lage sämtlicher Eckpunkte der Bildelemente in der Zeile $y=y_1$ gespeichert, und es kann berechnet werden, welche Ausgangsbildwerte den Bildelementen des Ausgangsbildes zugeordnet werden müssen. Die Bildwerte des Ausgangsbildes werden im folgenden mit $B_o(x,y)$ bezeichnet und die Bildwerte des Eingangsbildes $B_i$ (u,v). Fig. 3 zeigt, daß die vier Eckpunkte des Bildelementes des Ausgangsbildes mit den Koordinaten $x_2,y_1$ im Eingangsbild in die vier Punkte $P_1$, $P_2$, $P_3$ und $P_4$ übergehen. Weiterhin ist angenommen, daß die vier Geraden im Ausgangsbild, die die vier Eckpunkte verbinden, im Eingangsbild ebenfalls in Geraden übergehen, so daß sich ein Vieleck - bei vier Eckpunkten also ein Viereck - ergibt. Diese Annahme ist nicht völlig exakt (die Verbindungslinien zwischen den Punkten $P_1 ... P_4$ können auch gekrümmte Linien sein), doch stellt sie eine sehr gute Näherung dar.

Die Berechnung im Block 103 geht von der Überlegung aus, daß der Ausgangsbildwert durch die gewichtete Summe der Eingangs-Bildwerte derjenigen Bildelemente im Eingangsbild gebildet wird, die durch das Viereck $P_1 ...$ $P_4$ bedeckt werden. Die Eingangs-Bildwerte gehen dabei umso stärker in den Ausgangs-Bildwert ein, je größer die Fläche ist, die das Viereck in dem betreffenden Bild bedeckt. Bezeichnet man diese Flächen entsprechend Fig. 2 mit $F_1 ... F_4$, dann ergibt sich für den Ausgangs-Bildwert $B_0 (x_2,y_1)$ die Gleichung:

$$B_0(x_2,y_1) = c(F_1 B_i(u_1,v_1) + F_2 B_i(u_2,v_1) + F_3 B_i(u_1,v_2) + F_4 B_i(u_2,v_2))/F \tag{3}$$

c ist dabei eine geeignet gewählte, für alle Bildwerte eines Bildes gleiche Konstante, und F ist die Gesamtfläche des Vierecks ($P_1 ... P_4$) im Eingangsbild ($F = F_1 + F_2 + F_3 + F_4$). Allgemein gilt, daß der Ausgangs-Bildwert dem Integral der Eingangsbildwerte über die Fläche des Vierecks entspricht.

Diese Berechnung wird im Verfahrensschritt 103 für alle Bildelemente der Zeile $y=y_1$ durchgeführt und die dabei erhaltenen Ausgangsbildwerte $B_0(x,y_1)$ werden im Speicher 11 für das Ausgangsbild $B_0$ gespeichert.

Danach erfolgt eine Abfrage (104), ob die letzte Zeile (j=N+1) von Eckpunkten schon verarbeitet wurde. Ist dies nicht der Fall, wird die Zeilennummer um 1 erhöht (im Beispiel also $j=j_3$) und ebenso die Nummer der Bildpunktzeile ($y=y_2$ (Schritt 105)).

Für die neue Zeile von Eckpunkten des Ausgangsbildes wird dann wiederum im Verfahrensschritt 102 deren Lage u,v im Eingangsbild berechnet. Mit den so berechneten Werten werden im Bereich A des Speichers 12 die für die Zeile $j=j_1$ berechneten Werte überschrieben. Somit sind in den Bereichen A und B des Speichers 12 die Koordinaten u,v der Eckpunkte für die Zeilen j=$j_2$ und j=$j_3$ gespeichert, die die Bildelemente der Zeile y=$y_2$ definieren. Die zugehörigen Ausgangsbildwerte werden im Schritt 103 berechnet, wonach erneut die Abfrage 104 erfolgt. Wenn die Schleife 102 ... 105 nochmals durchlaufen wird, werden mit den dabei im Schritt 102 berechneten Werten u,v abwechseln die in den Bereichen B und A gespeicherten Werte überschrieben. Ergibt die Abfrage, daß die letzte Zeile (j=N+1) verarbeitet worden ist, dann sind sämtliche Bildwerte des Ausgangsbildes berechnet und daß Programm beendet (106).

Genauso kann man die Lage der Eckpunkte statt zeilenweise auch spaltenweise berechnen kann (i=$i_1$, $i_2$ usw.). In diesem Fall werden im Verfahrensschritt 103 nacheinander die Ausgangsbildwerte für eine Spalte (x=$x_1$) berechnet und im Verfahrensschritt 104 muß dann abgefragt werden, ob die letzte Spalte von Eckpunkten schon verarbeitet worden ist (i > = N?).

Grundsätzlich ließe sich der Rechenaufwand dadurch verringern, daß man die Koordinaten u,v für sämtliche Eckpunkte des Ausgangsbildes einmal berechnet (in Form einer Adreßliste) speichert. Dies würde den Speicheraufwand ganz beträchtlich erhöhen, insbesondere wenn unterschiedlich verzerrte Eingangsbilder verarbeitet werden sollen, wie bei der Tomosynthese, bei der eine Vielzahl von Röntgenaufnahmen mit aus unterschiedlichen Strahlenquellenpositionen auf den Bildverstärker 4 auftreffender Röntgenstrahlung angefertigt werden. Deshalb wird die erneute Berechnung der Lage der Eckpunkte für jede Aufnahme bevorzugt, weil in diesem Fall für jedes Eingangsbild nur ein Satz von Polynomial-Koeffizienten $a_0$ ... $a_5$ und $b_0$ ... $b_5$ gespeichert sein muß (vergl. Gleichung (1) und (2)).

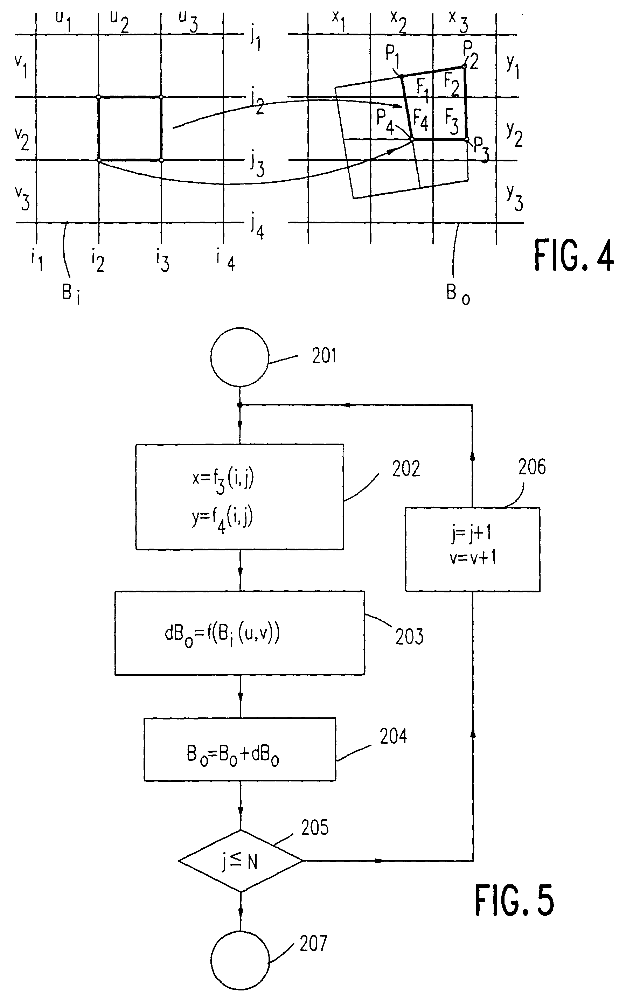

Im folgenden wird anhand der Figuren 4 und 5 die zweite Lösung erläutert. Wie Fig. 4 zeigt, wird dabei von den Eckpunkten des Eingangsbildes ausgegangen, und es wird zunächst ermittelt, welche Lage diesen Eckpunkten im Ausgangsbild zugeordnet ist. Die vier Eckpunkte im Eingangsbild definieren im Ausgangsbild ein Viereck (z.B. $P_1$ ... $P_4$), das mehrere Bildelemente bedeckt (hier: 4). Für jedes dieser Bildelemente wird aus dem Eingangs-Bildwert des zugehörigen Bildelements im Eingangsbild ein (Teil-) Ausgangs-Bildwert abgeleitet, der dem Verhältnis zwischen der vom Viereck bedeckten Fläche des Bildelements zur Gesamtfläche des Vierecks entspricht.

Bei dem anhand von Fig. 5 in Verbindung mit Fig. 4 erläuterten Transformationsverfahren entsprechend Fig. 4 wird wiederum davon ausgegangen, daß im Bereich A des Speichers 12 für eine erste Zeile von Eckpunkten (z.B. j=$j_2$) des Eingangsbildes die Lage der zugehörigen Koordinaten x,y im Ausgangsbild berechnet und gespeichert ist (Block 201). Im ersten Schritt 202 werden dann für die nächste Zeile (j=$j_3$) im Eingangsbild die zugehörigen Koordinaten x,y im Ausgangsbild berechnet. Diese Berechnung kann mit Hilfe eines Polynoms entsprechend den Gleichungen (1) und (2) erfolgen, wenn man u durch x und v durch y ersetzt; allerdings stimmen die Polynomialkoeffizienten $a_0$ ... $a_5$ und $b_0$ ... $b_5$ nicht mit den Polynomialkoeffizienten überein, die sich bei dem Verfahren nach der ersten Lösung ergeben, weil es sich hierbei um Umkehrfunktionen handelt. Die so berechneten Werte x,y werden in den Bereich B des Speichers 12 (Fig. 1) geschrieben.

Danach ist im Speicher 12 die Lage von zwei Zeilen von Eckpunkten gespeichert, die zusammen eine Zeile von Bildelementen definieren.

Anschließend wird für die von dem Viereck bedeckten Bildelemente im Ausgangsbild der (Teil-) Ausgangs-Bildwert $dB_o$ aus dem Eingangs-Bildwert des zugehörigen Bildelementes im Eingangsbild abgeleitet (Block 203). Gemäß Fig. 4 werden beispielsweise die Bildelemente des Ausgangsbildes mit den Koordinaten x=$x_2$ oder x=$x_3$ und y=$y_1$ oder y=$y_2$ von dem Eingangsbildwert $B_i(u_2,v_2)$ beeinflußt. Für das Ausgangsbildelement $x_2,y_2$ beispielsweise ergibt sich

$$dB_o(x_2,y_2) = c \cdot F_4/F_o \cdot B_i(u_2,v_2) \tag{4}$$

Dabei ist c eine Konstante, $F_o$ die Gesamtfläche des durch die Punkte $P_1$ ... $P_4$ definierten Vierecks im Ausgangsbild und $F_4$ die Teilfläche des Bildelementes $x_2$, $y_2$, die vom Viereck bedeckt wird.

Wie Fig. 4 zeigt, hängt der Ausgangs-Bildwert $B_0(x_2,y_2)$ aber nicht nur von dem Eingangs-Bildwert $B_i(u_2,v_2)$ ab, sondern auch von den Eingangs-Bildwerten $B_i(u_1,v_2)$, $B_i(u_1,v_3)$ und $B_i(u_2,v_3)$, die zu Bildelementen gehören, die sich unter und/oder neben dem Bildelement $u_2,v_2$ im Eingangsbild befinden. Infolgedessen wird im Verfahrensschritt 204 der Wert $dB_o$ zu dem Ausgangs-Bildwert addiert, der im Speicher 11 für das betreffende Ausgangs-Bildelement gespeichert ist.

Wenn die letzte Zeile von Eckpunkten noch nicht verarbeitet ist (Abfrage 205), werden die Werte j und v um 1 erhöht (j=$j_4$ und v=$v_3$ (Schritt 306)), und es werden im Schritt 202 die Koordinaten x,y im Ausgangsbild der Eckpunkte dieser Zeile berechnet. Mit den berechneten Werten werden im Speicher 12 die im Bereich A für die vorletzte Zeile (j=$j_2$) gespeicherten Koordinaten überschrieben. Danach wiederholt sich das Berechnungsverfahren gemäß Schritt 203 für die Bildelemente der nachfolgenden Zeile (v=$v_2$) und die dabei berechneten Werte werden zu den im Speicher 11 schon enthaltenen Werten hinzuaddiert. Beim nächsten Durchlauf der Programmschleife 204 bis 206 werden mit den neu berechneten Koordinatenwerten die im Bereich B des Speichers 12 gespeicherten Koordinaten der vorletzten Zeile (j=$j_3$) überschrieben. Das Verfahren ist beendet, wenn im Schritt 205 festgestellt wird, daß alle Zeilen der Bildelemente des Eingangsbildes auf diese Weise verarbeitet worden sind.

Da bei dieser zweiten Lösung dies Ausgangs-Bildwerte erst schrittweise durch Addition bzw. Akkumulation gebildet werden, während bei dem Verfahren nach den Figuren 2 und 3 bei jedem Rechenschritt (103) ein vollständiger Bildwert erzeugt wird, wird die erste Lösung bevorzugt.

Es versteht sich von selbst, daß analog zu dem ersten Verfahren die Koordinaten der Eckpunkte im Ausgangsbild spaltenweise statt zeilenweise bestimmt werden können. Ebenso können - mit entsprechend vergrößertem Speicheraufwand - die berechneten Koordinaten einmal berechnet und in einer Adreßliste gespeichert werden, um bei nachfolgenden Entzerrungsoperationen herangezogen zu werden.

**Patentansprüche**

1. Verfahren zum Transformieren eines durch eine Röntgenaufnahme erzeugten verzerrten Eingangsbildes ($B_i$), das sich aus durch ihre Lage (u,v) und ihren jeweiligen Eingangs-Bildwert ($B_i$(u,v)) definierten Bildelementen zusammensetzt, in ein im wesentlichen verzerrungsfreies Ausgangsbild ($B_o$), das sich aus durch ihre Lage (x,y) und ihren Ausgangs-Bildwert (B (x,y)) definierten Bildelementen zusammensetzt,
   **dadurch gekennzeichnet, daß** die Lage (u,v) der Eckpunkte (i,j) der Bildelemente des Ausgangsbildes ($B_o$) in dem Eingangsbild ($B_i$) sowie die Fläche ($F_1 ... F_4$) des von den Eckpunkten in dem Eingangsbild definierten Vieleckes bestimmt wird und daß den Bildelementen des Ausgangsbildes jeweils ein Ausgangs-Bildwert ($B_o$(x,y)) zugeordnet wird, der dem Integral der Eingangs-Bildwerte über die vom zugehörigen Vieleck bedeckte Fläche im Eingangsbild entspricht.

2. Verfahren zum Transformieren eines durch eine Röntgenaufnahme erzeugten verzerrten Eingangsbildes ($B_i$), das sich aus durch ihre Lage (u,v) und ihren jeweiligen Eingangs-Bildwert ($B_i$(u,v)) definierten Bildelementen zusammensetzt, in ein im wesentlichen verzerrungsfreies Ausgangsbild ($B_o$), das sich aus durch ihre Lage und ihren Ausgangs-Bildwert definierten Bildelemente zusammensetzt,
   **dadurch gekennzeichnet, daß** die Lage (x,y) der Eckpunkte (i,j) der Bildelemente des Eingangsbildes in dem Ausgangsbild sowie die Fläche ($F_1 ... F_4$) der von den Eckpunkten in dem Ausgangsbild definierten Vielecke bestimmt wird und daß die Eingangs-Bildwerte ($B_i(u_2, v_2)$) derjenigen Bildelemente, deren Eckpunkte in einem Bildelement des Ausgangsbildes liegen, durch gewichtete Summenbildung zur Bestimmung des Ausgangs-Bildwertes $B_o(x_2,y_2)$ des betreffenden Bildelementes des Ausgangsbildes herangezogen werden.

3. Verfahren nach Anspruch 1,
   **dadurch gekennzeichnet, daß** zunächst die Lage der Eckpunkte aller Bildelemente bestimmt und gespeichert wird, bevor die Zuordnung zwischen den Bildwerten des Eingangsbildes und des Ausgangsbildes erfolgt.

4. Verfahren nach Anspruch 1,
   **dadurch gekennzeichnet, daß** die Lage der zu einer ersten Reihe oder Spalte von Bildelementen gehörenden Eckpunkte berechnet und gespeichert wird, daß danach für Bildelemente dieser Reihe bzw. Spalte und die dazu korrespondierenden Vielecke in dem anderen Bild die Zuordnung erfolgt, daß danach die Lage der Eckpunkte einer zweiten, der ersten benachbarten Reihe bzw. Spalte von Bildelementen unter Verwendung der zu diesen Bildelementen gehörenden Eckpunkte der Bildelemente der ersten Reihe bzw. Spalte erfolgt, wonach für die zweite Reihe bzw. Spalte von Bildelementen die Zuordnung der Bildwerte erfolgt.

5. Anordnung zur Durchführung des Verfahrens nach Anspruch 1,
   **gekennzeichnet durch**

   a) ein Röntgenaufnahmesystem (1,4) zum Erzeugen einer Röntgenaufnahme **durch** eine Röntgenaufnahme,
   b) einen Bildwandler zum Umsetzen des Eingangsbildes in eine Folge digitaler Bildwerte, die das Eingangsbild ($B_i$),
   c) eine Speicheranordnung (10,11) zum Speichern von Eingangs-Bildwerten und von Ausgangs-Bildwerten,
   d) Mitteln (7; 102; 202) zur Bestimmung der Lage (u,v) von Eckpunkten des einen Bildes ($B_o$) in dem anderen Bild sowie der Fläche ($F_1 ... F_4$) der von den Eckpunkten im anderen Bild definierten Vielecke.
   e) Mittel (7; 103; 203) zur Zuordnung zwischen den Bildwerten eines Bildelements und des zugehörigen Vielecks in dem anderen Bild.

**Claims**

1. A method for transforming a distorted input image ($B_i$) produced by an X-ray exposure and composed of pixels defined by their position (u,v) and their respective input image value ($B_i(u,v)$), into a substantially distortion-free output image ($B_o$) composed of pixels defined by their position (x,y) and their output image value ($B_o(x,y)$), **characterized in that** the position (u,v) of the comer points (i,j) of the pixels of the output image ($B_o$) in the input image ($B_i$) is determined as well as the surface area ($F_1 ... F_4$) of the polygon defined by the comer points in the input image, the pixels of the output image being assigned a respective output image value ($B_o(x,y)$) which corresponds to the integral of the input image values over the input image surface area covered by the associated polygon.

2. A method for transforming a distorted input image ($B_i$), produced by an X-ray exposure and composed of pixels defined by their position (u,v) and their respective input image value ($B_i(u,v)$), into a substantially distortion-free output image ($B_o$) composed of pixels defined by their position and their output image value, **characterized in that** the position (x,y) of the comer points (i,j) of the pixels of the input image is determined in the output image and also the surface area ($F_1 ... F_4$) of the polygon defined by the comer points in the output image, the input image values ($B_i(u_2,v_2)$) of the pixels whose comer points are situated in a pixel of the output image being used, by weighted summing, to determine the output image value ($B_o(x_2,y_2)$) of the relevant pixel of the output image.

3. A method as claimed in Claim 1, **characterized in that** first the position of the comer points of all pixels is determined and stored before the image values of the input image and the output image are assigned to one another.

4. A method as claimed in Claim 1, **characterized in that** the position of the comer points belonging to a first row or column of pixels is calculated and stored, that subsequently the assignment takes place for pixels of this row or column and the corresponding polygons in the other image, that subsequently the position of the comer points of a second row or column of pixels, neighboring the first row or column, is determined while utilizing the comer points of the pixels of the first row or column associated with these pixels, after which the assignment of the image values is carried out for the second row or column of pixels.

5. A device for carrying out the method claimed in Claim 1, **characterized in that** it includes:

   a) an X-ray system (1,4) for generating an input image by way of an X-ray exposure,
   b) an image converter for converting the input image into a series of digital image values constituting the input image ($B_i$),
   c) a storage device (10, 11) for storing input image values and output image values,
   d) means (7; 102; 202) for determining the position (u,v) of corner points of one image ($B_o$) in the other image as well as the surface area ($F_1 ... F_4$) of the polygons defined by the corner points in the other image,
   e) means (7; 103; 203) for assigning the image values of a pixel to the associated polygon in the other image.

**Revendications**

1. Procédé de transformation d'une image d'entrée ($B_i$) déformée produite par une radiographie qui se compose d'éléments d'image définis par leur position (u, v) et leur valeur d'image d'entrée ($B(u,v)$) respective en une image de sortie ($B_0$) essentiellement exempte de distorsions qui se compose d'éléments d'image définis par leur position (x, y) et leur valeur d'image de sortie ($B_0(x,y)$),
   **caractérisé en ce que** la position (u, v) des points d'angle (i, j) des éléments d'image de l'image de sortie ($B_0$) dans l'image d'entrée ($B_i$) ainsi que la surface ($F_1,...,F_4$) du polygone défini par les points d'angle dans l'image d'entrée sont déterminées et qu'une valeur d'image de sortie ($B_0(x, y)$) est respectivement affectée aux éléments d'image de l'image de sortie et correspond à l'intégrale des valeurs d'image d'entrée sur la surface couverte par le polygone correspondant dans l'image d'entrée.

2. Procédé de transformation d'une image d'entrée ($B_i$) déformée produite par une radiographie qui se compose d'éléments d'image définis par leur position (u, v) et leur valeur d'image d'entrée respective ($B_i(u,v)$) en une image de sortie ($B_0$) essentiellement exempte de distorsions qui se compose d'éléments d'image définis par leur position et leur valeur d'image de sortie,
   **caractérisé en ce que** la position (x, y) des points d'angle (i, j) des éléments d'image de l'image d'entrée dans l'image de sortie ainsi que la surface ($F_1,...,F_4$) des polygones définis par les points d'angle dans l'image de sortie sont déterminées et que les valeurs d'image d'entrée ($B_i(u_2,v_2)$) des éléments d'image dont les points d'angle se situent dans un élément d'image de l'image de sortie sont utilisées par addition pondérée en vue de la détermination de la valeur d'image de sortie $B_0(x_2,y_2)$ de l'élément d'image correspondant de l'image de sortie.

3. Procédé selon la revendication 1,
   **caractérisé en ce que** la position des points d'angle de tous les éléments d'image est d'abord déterminée et enregistrée avant que l'affectation entre les valeurs d'image de l'image d'entrée et de l'image de sortie ne soit effectuée.

4. Procédé selon la revendication 1,
   **caractérisé en ce que** la position des points d'angle appartenant à la première rangée ou colonne d'éléments d'image est calculée et enregistrée, qu'ensuite, l'affectation est effectuée pour les éléments d'image de cette rangée ou colonne et les polygones correspondants dans l'autre image, qu'ensuite, la position des polygones d'une deuxième rangée ou colonne d'éléments d'image, voisine de la première, est déterminée en utilisant les points d'angle appartenant à ces éléments d'image des éléments d'image de la première rangée ou colonne, après quoi l'affectation des valeurs d'image est effectuée pour la deuxième rangée ou colonne d'éléments d'image.

5. Dispositif de mise en oeuvre du procédé selon la revendication 1,
   **caractérisé par**

   a) un système de radiographie (1, 4) en vue de la production d'une radiographie par une radiographie;
   b) un convertisseur d'images en vue de la transformation de l'image d'entrée en une séquence de valeurs d'image numériques, qui forment l'image d'entrée ($B_i$);
   c) un dispositif d'enregistrement (10, 11) en vue de l'enregistrement de valeurs d'image d'entrée et de valeurs d'image de sortie;
   d) des moyens (7, 102; 202) en vue de la détermination de la position (u, v) de points d'angle d'une image ($B_0$) dans l'autre image ainsi que la surface ($F_1,...F_4$) du polygone défini par les points d'angle dans l'autre image.
   e) des moyens (7, 103, 203) en vue de l'affectation entre les valeurs d'image d'un élément d'image et le polygone correspondant dans l'autre image.

FIG. 1

FIG. 2

$\underline{Bi}$        $\underline{Bo}$

101

$u = f_1(i,j)$
$v = f_2(i,j)$                102

$B_0(x,y) = \Sigma F \, B_i$        103

$j \leq N?$                104

$j = j+1$
$y = y+1$                105

106

FIG. 3

FIG. 4

FIG. 5